(19) Europäisches Patentamt
European Patent Office
Office européen des brevets

(11) **EP 4 443 315 A1**

(12) **EUROPEAN PATENT APPLICATION**

(43) Date of publication:
**09.10.2024 Bulletin 2024/41**

(21) Application number: **23167009.2**

(22) Date of filing: **06.04.2023**

(51) International Patent Classification (IPC):
**G06F 18/2413** (2023.01)   **G06T 7/00** (2017.01)
**G06V 10/44** (2022.01)   **G06V 10/764** (2022.01)
**G06V 20/69** (2022.01)

(52) Cooperative Patent Classification (CPC):
**G06V 10/454; G06F 18/2413; G06T 7/0012;
G06V 10/764; G06V 20/698;** G06V 2201/03

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NeraCare GmbH
60318 Frankfurt am Main (DE)**

(72) Inventor: **Ackermann, Leonhard
60325 Frankfurt am Main (DE)**

(74) Representative: **Schott, Jakob Valentin
Wuesthoff & Wuesthoff
Patentanwälte und Rechtsanwalt PartG mbB
Schweigerstraße 2
81541 München (DE)**

(54) **TECHNIQUE FOR OBTAINING A PROGNOSTIC RISK SCORE BASED ON A HISTOLOGICAL IMAGE OF A STAINED TISSUE SAMPLE OF A PATIENT HAVING A MELANOMA**

(57)  Disclosed is a medical image analysis method, comprising obtaining at least one histological image depicting a primary melanoma tumor comprised in a stained tissue sample of a patient. The method further comprises analyzing the obtained image with a convolutional neural network, trained using (a) histological images depicting melanoma tumors of a plurality of persons and (b) person-specific event information indicative of (i) the person having experienced a predefined event and the time of the predefined event or (ii) the person not having experienced the predefined event and a time of observation of the person, to obtain a prognostic score indicative of a risk for the patient to experience a relapse, a metastasis or death. A method for training a corresponding convolutional neural network, a computer program product and a processing system are also disclosed.

202

Obtain at least one histological image of a stained tissue sample of a patient, the at least one image depicting at least a part of a primary melanoma tumor comprised in the stained tissue sample of the patient

204

Analyze the obtained at least one histological image with convolutional neural network to obtain prognostic score

**Fig. 2**

EP 4 443 315 A1

**Description**

TECHNICAL FIELD

The present disclosure generally relates to a medical image analysis method for obtaining a prognostic score indicative of a risk for a patient, having a melanoma, to experience a predefined event. The present disclosure also relates to a method for training a convolutional neural network configured to analyze at least one histological image of a stained tissue sample of a patient. A computer program product and a processing system are also disclosed herein.

BACKGROUND

Clinical and pathological staging of melanoma patients relies on tumor size, also known as Breslow thickness, ulceration and lymph node involvement. It has been shown patients with the thinnest melanomas in Tumor Stage T1 and with the most favorable prognosis resulted the most melanoma deaths in absolute numbers. Additionally, patients from Tumor Stage T3b onwards can be now offered potent adjuvant therapy. It may be desirable to identify patients with small tumors but high risk of relapse and/or to spare therapy for patients in advanced disease but with low mortality or recurrence risk. More generally speaking, it may be desirable to obtain a measure of a risk for a patient, having a melanoma, to experience a relapse, metastasis or death.

SUMMARY

There is a need for a technique that solves one or more of the aforementioned or other problems.
According to a first aspect, a medical image analysis method for obtaining a prognostic score indicative of a risk for a patient, having a melanoma, to experience a predefined event, is provided. The method is performed by a processing system and may thus be referred to as a computer-implemented method and/or a data processing method. The method does not comprise a surgical step.
The method comprises obtaining at least one histological image of a stained tissue sample of a patient, the at least one image depicting at least a part of a primary melanoma tumor comprised in the stained tissue sample of the patient. The tissue sample of the patient may be stained with hematoxylin and eosin, H&E. The tissue sample of the patient may be formalin-fixed. The tissue sample of the patient may be embedded in paraffin. The tissue sample may be formalin-fixed paraffin embedded, FFPE. The image may be acquired by imaging the tissue sample as such, or by imaging a slice of the tissue sample. Staining the tissue sample may improve visibility and/or identification of the primary melanoma tumor in the at least one histological image. Fixation and embedding of the tissue sample may increase the time available for acquiring the at least one image of the tissue sample and preserve the tissue sample over a longer period of time.
The method further comprises analyzing the obtained at least one histological image with a convolutional neural network, trained using (e.g., at least) (i) histological images depicting at least parts of melanoma tumors comprised in stained tissue samples of a plurality of persons and (ii) person-specific event information. Each of the histological images used for the training of the convolutional neural network may depict at least a part of a (e.g., primary) melanoma tumor of a person. The stained tissue samples of the plurality of persons may be stained with hematoxylin and eosin, H&E. The stained tissue samples of the plurality of persons may be formalin-fixed. The stained tissue samples of the plurality of persons may be embedded in paraffin. The stained tissue samples of the plurality of persons may be formalin-fixed paraffin embedded, FFPE. As mentioned above, staining the tissue samples may improve visibility and/or identification of melanoma tumors in the histological images. Fixation and embedding of the tissue samples may increase the time available for acquiring the histological images of the tissue samples and preserve the tissue samples over a longer period of time.
The person-specific event information (e.g., for each of the plurality of persons) is indicative of (i) the (e.g., respective) person having experienced a predefined event and the time of the predefined event or (ii) the (e.g., respective) person not having experienced the predefined event and a time (e.g., period) of observation of the person. That is, for training the convolutional neural network, not only images are used, but also the person-specific event information indicative of a certain time of an event or of an observation period. This may improve the reliability and performance of an obtained prognostic score.
The method in particular comprises analyzing the obtained at least one histological image with the convolutional neural network to obtain a prognostic score indicative of a risk for the patient to experience the predefined event. The predefined event comprises at least one of a relapse (e.g., a re-hospitalization), a metastasis (e.g., fulfilling one or more predefined medical parameters such as a size, degree and spreading speed) and death.
The convolutional neural network may be or may have been trained (e.g., in advance of analyzing the at least one histological image) by minimizing a loss function that is dependent on at least the person-specific event information.

The loss function may depend on both an output of the convolutional neural network and the person-specific event information. In this manner, the person-specific event information may be incorporated into the trained convolutional neural network. Compared with approaches that only use (e.g., labeled) images for training a convolutional neural network, this technique may improve the reliability and performance of the output of the convolutional neural network.

The loss function may be based on a survival analysis hazard function. This may be advantageous compared with other loss functions, as the survival analysis hazard function may consider time-dependent information such as the person-specific event information.

The loss function may be dependent on a risk set corresponding to a subset of the plurality of persons, wherein the person-specific information of each person of the subset of the plurality of persons fulfils one or more preset criteria. The one or more preset criteria may comprise a first threshold defining a time before which the predefined event must be experienced by the person or a second threshold defining a time after which the predefined event must be experienced by the person. The one or more preset criteria may comprise a third threshold defining a time before which the predefined event must not be experienced by the person or a fourth threshold defining a time after which the predefined event must not be experienced by the person. The one or more present criteria may comprise a fifth threshold defining a time before which the observation of the person must have ended (e.g., if the person has not experienced the predefined event) or a sixth threshold defining a time after which the observation of the person must have ended (e.g., if the person has not experienced the predefined event). The one or more present criteria may comprise a seventh threshold defining a time before which the observation of the person must not have ended (e.g., if the person has not experienced the predefined event) or an eighth threshold defining a time after which the observation of the person must not have ended (e.g., if the person has not experienced the predefined event). The loss function may be dependent on a risk set corresponding to a subset of the plurality of persons, wherein each of the persons in the subset has not experienced the predefined event before a given time (e.g., defined by the third threshold). Alternatively, the loss function may be dependent on a second risk set corresponding to a second subset of the plurality of persons, wherein each of the persons in the second subset has experienced the predefined event before a given time (e.g., defined by the first threshold).

The loss function may comprise or be equal to:

$$log \sum_{j \in R_i} e^{\hat{h}_\theta(x_j)}$$

wherein log denotes the natural logarithm, $R_i$ denotes the risk set, e denotes Euler's number, $\hat{h}_\theta$ denotes the output of the convolutional neural network based on $x_j$ denoting the histological image of one of the persons associated with the index $j$. In one example, $R_i = \{j | y_j \geq y_i\}$ with the given time $y_i$ of the predefined event (e.g., or of the end of the observation). In this example, one may say that the risk set comprises or consists of (e.g., the images of) the persons that have experienced the predefined event (e.g., not at all, or) after the person associated with the index $i$, who experienced the predefined event at the given time $y_i$.

The loss function may comprise or be equal to:

$$\delta_i \left( \hat{h}_\theta(x_i) - log \sum_{j \in R_i} e^{\hat{h}_\theta(x_j)} \right)$$

wherein $\delta_i$ corresponds to a binary value indicating whether the person associated with the index $i$ has experienced the predefined event or not, and $x_i$ denotes the histological image of the person associated with the index $i$.

The loss function may comprise or be equal to:

$$- \sum_{i \in B} \delta_i \left( \hat{h}_\theta(x_i) - log \sum_{j \in R_i} e^{\hat{h}_\theta(x_j)} \right)$$

wherein $B$ denotes a mini batch. A mini batch may correspond to a subset of the training data, in particular a subset of (e.g., the histological images of) the plurality of persons. In this case, the risk set $R_i$ may only comprise persons that are part of the mini batch $B$.

The loss function may comprise a regularization term. The regularization term may be configured to minimize a domain shift (e.g., of outputs of the convolutional neural network when the convolutional neural network was trained with the loss function comprising the regularization term). The domain shift may correspond to differences in the output of the convolutional neural network that are caused by and/or correlated with a type of an image acquisition unit used to acquire the analyzed (e.g., input) image(s). The regularization term may comprise or be equal to:

$$\lambda \left( \sum_{j \in B} \hat{h}_\theta(x_j) \right)^\varepsilon$$

wherein $\lambda$ denotes a predefined regularization factor (e.g., a rational number) and $\varepsilon$ denotes a weighting factor. $\varepsilon$ may be a positive natural number, for example 2. The predefined regularization factor may depend on the size of the mini batch. For example, the predefined regularization factor may comprise or be equal to:

$$\lambda = \gamma \left( \frac{1}{|B|} \right)$$

wherein $|B|$ designates the size of the mini batch (e.g., the number of persons and/or images considered as part of the mini batch) and $\gamma$ designates a rational number.

The loss function may comprise or be equal to:

$$-\sum_{i \in B} \delta_i \left( \hat{h}_\theta(x_i) - log \sum_{j \in R_i} e^{\hat{h}_\theta(x_j)} \right) + \lambda \left( \sum_{j \in B} \hat{h}_\theta(x_j) \right)^2$$

The convolutional neural network may be or may have been trained (e.g., in advance of analyzing the at least one histological image) using a stochastic gradient descent optimization algorithm (e.g., to minimize the loss function). The convolutional neural network may be or may have been trained (e.g., in advance of analyzing the at least one histological image) using the Adam optimization algorithm (e.g., to minimize the loss function).

The convolutional neural network may comprise 8 convolutional layers. The convolutional neural network may comprise 4 pooling layers. The convolutional neural network may comprise 3 dense layers.

The analyzed at least one histological image may be unsegmented and/or unlabeled. Alternatively, or in addition, one or more of the histological images of the plurality of persons may be unsegmented and/or unlabeled. All images used for training the convolutional neural network may be unsegmented and/or unlabeled images. The images used for training the convolutional neural network, and, optionally, the at least one histological image analyzed by the convolutional neural network, may not comprise marked and/or labeled regions of interest, ROI.

An output of the convolutional neural network (e.g., when using the at least one obtained histological image (e.g., as raw data or after a preprocessing step) as input for the convolutional neural network) may be used as the prognostic score. Alternatively, to obtain the prognostic score, an output of the convolutional neural network may be normalized based on a predefined correction value associated with a type of an imaging unit used to acquire the at least one histological image. The predefined correction value may be based on a mean and/or a standard deviation of outputs of the convolutional neural network obtained for histological images acquired with a same type of the imaging unit.

The method may further comprise training the convolutional neural network with the histological images of the plurality of persons and the person-specific event information (e.g., before analyzing the obtained at least one histological image). The convolutional neural network may be trained by applying the loss function per mini batch (e.g., having a size of 3, 5 or 10 histological images and/or persons). The histological images of the plurality of persons may be changed in size (e.g., to have similar sizes) before being used for training the convolutional neural network. The plurality of persons may comprise or consist of persons having a cancer of one of stages IA-IIID.

The method may further comprise triggering display of the prognostic score and/or linking the prognostic score with the at least one histological image. The at least one histological image may be labeled with the prognostic score (e.g., as part of the image's metadata).

According to a second aspect, a method for training a convolutional neural network is provided. The convolutional neural network is configured to analyze (e.g., usable for analyzing) at least one histological image of a stained tissue sample of a patient, the at least one image depicting at least a part of a primary melanoma tumor comprised in the stained tissue sample of the patient, to obtain a prognostic score indicative of a risk for the patient to experience the predefined event, wherein the predefined event comprises at least one of a relapse, a metastasis and death. The convolutional neural network may be the convolutional neural network used in the method according to the first aspect.

The method according to the second aspect comprises obtaining histological images depicting at least parts of melanoma tumors comprised in stained tissue samples of a plurality of persons, and obtaining person-specific event information indicative of (i) the person having experienced the predefined event and the time of the predefined event or (ii) the person not having experienced the predefined event and a time of observation of the person. The method according to the second aspect further comprises training the convolutional neural network based on the obtained histological images of the plurality of persons and based on the obtained person-specific event information.

The method of the second aspect may be part of the method of the first aspect. In particular, the method of the second aspect may be performed to train the convolutional neural network then used to analyze the at least one histological image for obtaining the prognostic score. The method of the second aspect may comprise one or more additional features described above for the first aspect.

According to a third aspect, a computer program product is provided. The computer program product stores instructions that, when executed by the at least one processor, cause the at least one processor to perform the method according to the first and/or the second aspect. The computer program product may be embodied as a non-transitory computer readable storage medium such as a hard disk drive, a portable storage carrier or a (e.g., virtual and/or cloud-based) data storage.

According to a fourth aspect, a processing system is provided. The processing system comprises at least one processor and at least one memory, the at least one memory storing instructions that, when executed by the at least one processor, cause the at least one processor to perform the method according to the first and/or the second aspect. The processing system may be a distributed processing system, a cloud computing system, a server or a local processing system. The processing system may be communicatively connected to, or be part of, a network of a hospital or a histological laboratory.

BRIEF DESCRIPTION OF THE DRAWINGS

Further details, advantages and aspects of the present disclosure will become apparent from the following embodiments taken in conjunction with the drawings, wherein:

Fig. 1    shows a first embodiment of a processing system in accordance with the present disclosure;

Fig. 2    shows a first method in accordance with the present disclosure;

Fig. 3    shows a second method in accordance with the present disclosure;

Fig. 4    shows a convolutional neural network in accordance with the present disclosure; and

Fig. 5    shows exemplary output values of the convolutional neural network showing a domain shift.

DETAILED DESCRIPTION

In the following description, exemplary embodiments will be explained with reference to the drawings. The same reference numerals will be used to denote the same or similar structural features.

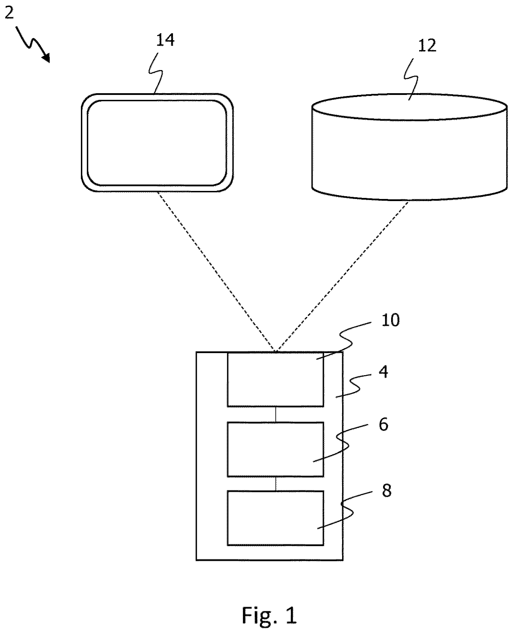

Fig. 1 shows a first embodiment of a system 2 in accordance with the present disclosure. The system 2 comprises a processing system 4. The processing system 4 comprises at least one processor 6 communicatively linked to at least one memory 8. The at least one memory 8 stores instructions (e.g., in the form of a computer program) that, when executed by the at least one processor 6, cause the at least one processor 6 to perform the method(s) described herein. The at least one memory 8 is an example of a computer program product. The processing system 4 may also comprise a communication interface 10 configured to communicate with a display unit 14 and/or a database 12. The processing system 4 may be configured as a distributed (e.g., cloud-based) processing system.

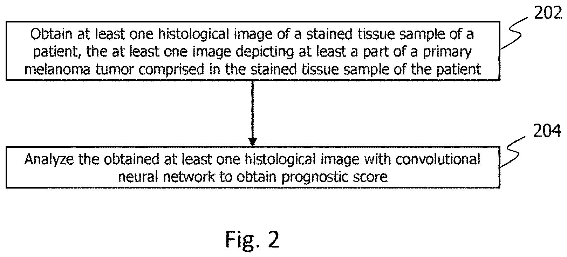

Fig. 2 shows a first method in accordance with the present disclosure. The first method may be performed by the processing system 4, in particular by the at least one processor 6.

In step 202, at least one histological image of a stained tissue sample of a patient is obtained. The at least one histological image may be obtained from an image acquisition unit, from the at least one memory 8 or from the database 12. The at least one histological image depicts at least a part of a primary melanoma tumor comprised in the stained tissue sample of the patient.

The tissue sample of the patient may be stained with hematoxylin and eosin, H&E. The tissue sample of the patient may be formalin-fixed. The tissue sample of the patient may be embedded in paraffin. The tissue sample may be formalin-fixed paraffin embedded, FFPE. The image may be acquired by imaging the tissue sample as such, or by imaging a slice of the tissue sample. The at least one histological image as analyzed by the convolutional neural network may be unsegmented (e.g., free from identified regions of interest).

In step 204, the obtained at least one histological image is analyzed with a convolutional neural network to obtain a prognostic score indicative of a risk for the patient to experience a predefined event. The predefined event comprises at least one of a relapse, a metastasis and death. In other words, the at least one histological image is used as input data for the convolutional neural network in order to obtain an individual risk measure for the patient.

The convolutional neural network used in step 204 was trained before step 204, using not only histological images depicting at least parts of melanoma tumors comprised in stained tissue samples of a plurality of persons (e.g., part of a training data set), but also person-specific event information (e.g., for each of the plurality of persons of the training data set). The person-specific event information is indicative of (i) the (e.g., respective) person having experienced a predefined event and the time of the predefined event or (ii) the (e.g., respective) person not having experienced the predefined event and a time of observation of the person.

For each of person $i$ of the plurality of persons (e.g., of the training data set), at least one image $x_i$ and person-specific information $\delta_i$ may be used for training the convolutional neural network. For example, in case $\delta_i = 1$, the respective person $I$ has experienced the predefined event (e.g., has died) at time $T_i$. For example, if the person $i$ survived the observation period of the respective study, $\delta_i = 0$ wherein $T_i$ is the time the patient has been observed. $\delta$ may be referred to as delta function, which may define whether the data is censored or not.

The stained tissue samples of the plurality of persons may be stained with hematoxylin and eosin, H&E. The stained tissue samples of the plurality of persons may be formalin-fixed. The stained tissue samples of the plurality of persons may be embedded in paraffin. The stained tissue samples of the plurality of persons may be formalin-fixed paraffin embedded, FFPE. Each of the images may be acquired by imaging the respective tissue sample as such, or by imaging a slice of the respective tissue sample. The images of the stained tissue samples of the plurality of persons as used for training the convolutional neural network may be unsegmented (e.g., free from identified regions of interest).

The plurality of persons may comprise or consist of persons from the American Joint Committee on Cancer (AJCC) set, including persons with tumor stages IA to IIID. The plurality of persons may comprise or consist of persons from Central Malignant Melanoma Registry (CMMR), including persons with tumor stages IIA to IIC. The histological images of the plurality of persons may have been acquired at different locations (e.g., in Bern, Bochum, Bonn, Tübingen and/or Kiel). The histological images may have been acquired with a same image acquisition unit (e.g., Hamatasu NanoZoomer S210, or Hamatasu Nanozoomer 2.0 HAT). The histological images of the plurality of patients may exclude images depicting cracks in a microscopic slide or coverslip supporting the respective tissue sample.

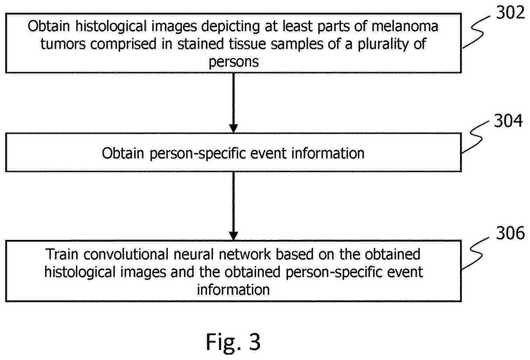

Fig. 3 shows a second method in accordance with the present disclosure. The second method may be performed by the processing system 4, in particular by the at least one processor 6. The second method may be performed in advance of the first method.

In steps 302 and 304, training data for training the convolutional neural network may be obtained.

More specifically, in step 202, the histological images depicting at least parts of melanoma tumors comprised in the stained tissue samples of the plurality of persons are obtained (e.g., from an image acquisition unit, from the at least one memory 8 or from the database 12).

In step 204, the person-specific event information is obtained (e.g., from the at least one memory 8 or from the database 12).

In step 206, the convolutional neural network is trained based on (e.g., using) the obtained histological images of the plurality of persons, and based on the obtained person-specific event information.

The following applies to both the first and the second method.

The convolutional neural network may be trained by minimizing a loss function that is dependent on at least the person-specific event information. The convolutional neural network may in particular be trained using a stochastic gradient descent optimization algorithm such as the Adam optimization algorithm to minimize the loss function. The convolutional neural network may be trained by evaluating and/or minimizing the loss function per mini batch. For example, the Adam optimizer may be employed over 50 epochs with a learning rate of 0.001 and a batch size of 5.

The loss function may be based on a survival analysis hazard function, for example the following hazard function $h(t|x)$ depending on time $t$ and an input vector $x$:

$$h(t|x) = h_0(t) * \exp(\beta^T x)$$

The baseline hazard function $h_0(t)$ indicates how large the hazard rate would be without the influence of other parameters and thus only depends on the time $t$. According to the present disclosure, the baseline hazard function does not need to be calculated. The parameters $\beta$ of the risk function $\beta^T x$ can be estimated by minimizing the following function, also referable to as negative log partial likelihood function:

$$l(\beta) = -\sum_{i=1}^{n} \delta_i(\beta^T x_i - log \sum_{j \in R_i} \exp(\beta^T x_j))$$

wherein $n$ corresponds to the total number of the plurality of persons, log denotes the natural logarithm, $R_i = \{j|y_j \geq y_i\}$ denotes the risk set corresponding to a subset of the plurality of persons, wherein each of the persons in the subset has not experienced the predefined event before the given time $y_i$.

When replacing the risk function $\beta^T x$ by the output $\hbar_\theta(x)$ of the convolutional neural network, the following loss function is obtained, which may be used in training the convolutional neural network disclosed herein:

$$L_1(\theta) := -\sum_{i \in B} \delta_i \left( \hbar_\theta(x_i) - log \sum_{j \in R_i} e^{\hbar_\theta(x_j)} \right)$$

wherein $B$ denotes a mini batch. In one preferred variant, the loss function comprises a regularization term to achieve a higher generalizability and reduce a domain shift. In particular, the following loss function may be used:

$$L_2(\theta) := -\sum_{i \in B} \delta_i \left( \hbar_\theta(x_i) - log \sum_{j \in R_i} e^{\hbar_\theta(x_j)} \right) + \lambda \left( \frac{1}{|B|} \left( \sum_{j \in B} \hbar_\theta(x_j) \right)^2 \right)$$

wherein $\lambda$ denotes a predefined regularization factor.

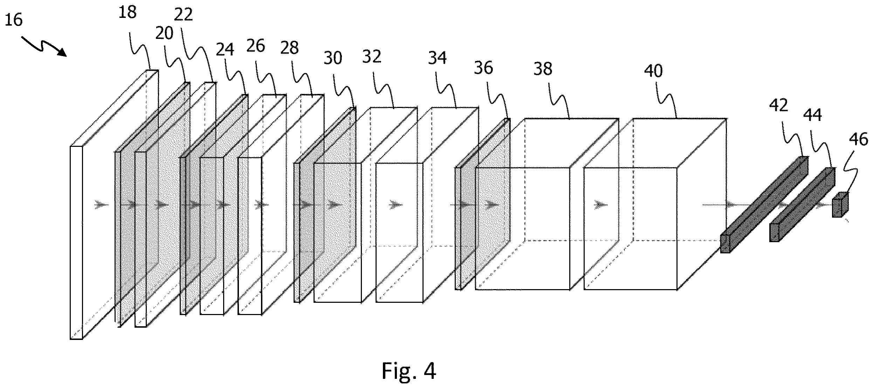

Fig. 4 shows a convolutional neural network 16 in accordance with the present disclosure. This network may be used in the first and/or the second method described herein.

The convolutional neural network 16 comprises 8 convolutional layers 18, 22, 26, 28, 32, 34, 38, 40 and 4 pooling layers 20, 24, 30, 36 and 3 dense layers 42, 44, 46. Input date may be fed to the first layer 18 and the last layer 46 may provide an output value. One or more (e.g., each) of the convolutional layers may have a kernel size of $3 \times 3$. One or more (e.g., each) of the pooling layers may have a pooling size of $2 \times 2$. The layer 18 may have a size of 2500x2500x64, the layer 22 may have a size of 1250x1250x64, the layers 26 and 28 may each have a size of 625x625x128, the layers 32 and 34 may be have a size of 313x313x256, the layer 38 may have a size of 4096x1, the layer 40 may have a size of 2048x1 and the layer 46 may have a size of 1 and provide the output of the convolutional neural network 16.

The convolutional neural network 16 may be fed with images having a predefined size (e.g., 2500x2000 pixels or 2500x2500 pixels). In case an image to be analyzed by the convolutional neural network 16 is larger, it may be reduced in size. The so-reduced image may be centered in a frame having the predefined size. A region inside the frame but outside the centered image may be colored in white. The resultant image may then be fed to the convolutional neural network 16 (e.g., to the layer 18).

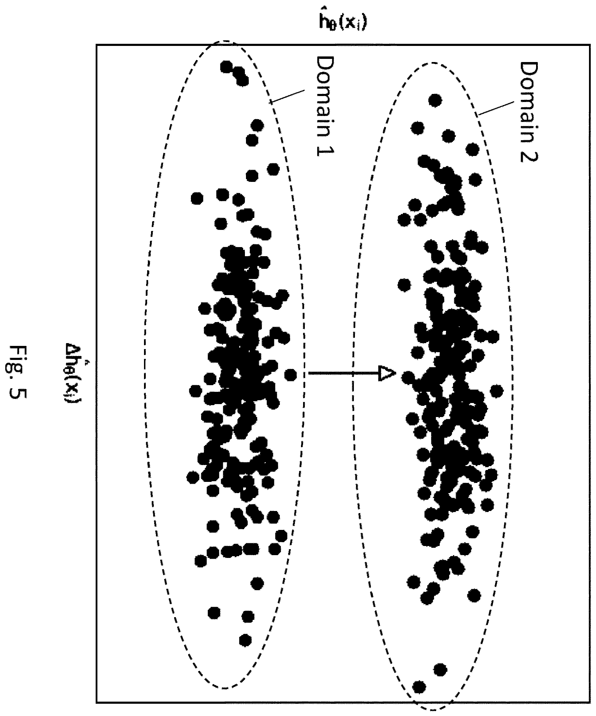

Fig. 5 exemplarily illustrates a domain shift of outputs of a convolutional neural network in case input images acquired with different types of image acquisition devices are analyzed. To reduce and/or prevent such a domain shift and make the prognostic scores more comparable, a regularization term may be incorporated into the loss function used for training the convolutional neural network, as described above. As an alternative or additional measure, an output of the convolutional neural network may be normalized based on a predefined correction value associated with a type of an imaging unit used to acquire the at least one histological image. In other words, the output may be normalized depending on the type of image acquisition device used.

The prognostic score may be triggered to be displayed (e.g., on the display unit 14) and/or linked with the at least one histological image. The at least one histological image may be labeled with the prognostic score (e.g., as part of the image's metadata). The prognostic score may be stored in the memory 8 and/or output (e.g., together with the analyzed at least one histological image), to the database 12.

The technique disclosed herein will now be discussed with reference to experimental data using two datasets A and B.

Dataset A: This dataset contains 767 images of 176 patients of the American Joint Committee on Cancer (AJCC) set stages IA to IIID from four different locations in Bern (Switzerland), Bochum, Bonn and Kiel, Germany. All images have been recorded with H&E coloring and were created by the same scanner Hamatasu NanoZoomer S210, NDP Version 2.4. In order to obtain a dataset of the highest possible quality, the data were first manually checked by medical experts and a total of 23 data points were removed from the data set, e.g. due to broken slides. This clean-up took place before we split the data into training, validation and test data: The patients are assigned to train (104 patients), test (36 patients) and validation (36 patients) what results in 591 train-, 74 validation- and 102 test images. The split was chosen so that the distribution of high/low risk patients in each subset (training, validation, test) corresponds to the distribution of the full dataset A, see also table 1, under the constraint that multiple images of one patient remain in the same subset.

Dataset B: The second dataset contains 242 images of 242 patients with AJCC stages IIA to IIC from the Central Malignant Melanoma Registry (CMMR) in Tübingen, Germany, where the H&E-colored images have partly different coloring than the images of Dataset A, probably caused by another scanner type Hamatasu Nanozoomer 2.0 HAT, NDP Version 2.5 and the scans are mostly disturbed by a marker pen on the slide. To see how the outputs of the convolutional neural network differ between images due to the domain gap (e.g., different imaging units used to acquire the respective images), dataset B is only used as a separate test dataset.

Table 1: Details of experimental datasets A and B

| Characteristic | Training | Dataset A Validation | Test | Dataset 8 Test |
|---|---|---|---|---|
| N(Scans) | 313 | 36 | 38 | 242 |
| N(Patients) | 104 | 36 | 36 | 242 |
| Alive / Censored | 89 (86%) | 31 (86%) | 31 (86%) | 212 (88%) |
| Dead / Event | 15 (14%) | 5 (14%) | 5 (14%) | 30 (12%) |
| MSS time (months) Mean | 70.12 | 80.03 | 78.37 | 50 |
| MSS time (months) Median | 70 | 73 | 73 | 41 |
| Relapse Free Survival Recurrence | 21 (20%) | 8 (22%) | 7 (19%) | 75 (31%) |
| Relapse Free Survival Non-recurrence | 83 (80%) | 28 (78%) | 29 (81%) | 167 (69%) |
| RFS time Mean | 67 | 76.67 | 75 | 42 |
| RFS time Median | 70 | 68 | 73 | 30 |

Both datasets A and B contain a total of 1009 images of different sizes (up to a resolution of $158.720 \times 115.456$ pixels) and various format ratios. The images are pre-processed to reduce computational effort. When pre-processed, the images are reduced from their original format by a factor of 64 in dataset A and 128 in dataset B in each dimension. Each of the resulting images is centered in a 2500 by 2000 pixel frame which is filled with white color outside the image. Images of patients with multiple images are seen as independent information in the training data (e.g., used as if they originate from different patients $i$). In training of the convolutional neural network, the Adam optimizer is employed over 50 epochs with a learning rate of $\alpha = 0.001$ and a batch size of 5.

For validation purposes, Harrel's concordance index (CI) can be used. The CI is defined as the ratio between correctly ordered pairs and all possible pairs:

$$CI = \frac{\#concordant\ pairs}{\#comparable\ pairs}$$

A pair of observations $i, j$ with its survival time fulfilling $T_i > T_j$, is concordant if $\hat{h}_\theta(x_j) > \hat{h}_\theta(x_i)$. Also, a pair $i, j$ is not comparable if the smaller survival time is censored (e.g., $T_i > T_j \wedge \Delta_j = 0$), otherwise the pair is comparable. Thus,

$$CI = \frac{\sum_{i,j} \mathbb{1}(T_i > T_j) \cdot \mathbb{1}(\hat{h}_\theta(x_j) > \hat{h}_\theta(x_i)) \cdot \Delta_j}{\sum_{i,j} \mathbb{1}(T_i > T_j) \cdot \Delta_j}$$

The CI estimates the probability of concordance for two independent prognostic scores. It can also be interpreted as a measure of the area under a time-dependent operator curve. A value of CI = 1 means that all observations are correctly sequenced, CI = 0.5 means that the method applies is not better than guessing.

In the evaluation of the results, another important measure is the area under the receiver operating characteristic (AUROC). For a data point with $a = P(F_p)$ the probability of the data point being a false positive prediction and $b - 1 = P(T_p)$ the negative probability of the data point being a true positive prediction in a dataset D, the AUROC may be defined as follows:

$$\mathrm{AUROC} = \sum_{i \in D} \left\{ (1 - b_i \cdot \Delta a) + \frac{1}{2} [\Delta(1 - b) \cdot \Delta a] \right\}$$

with $\Delta(1 - b) = (1 - b_i) - (1 - b_{i-1})$ and $\Delta a = a_i - a_{i-1}$.

An overview of all the concordance indices and AUROC values of the experiments is provided in table 2.

Table 2: Experimental results

| | Without regularization | | | | With regularization | | | |
|---|---|---|---|---|---|---|---|---|
| | Isolated | | Merged | | Isolated | | Merged | |
| | A (test) | B | Naive | Standardised | A (test) | B | Naive | Standardised |
| C-Index | 0.677 | 0.612 | 0.569 | 0.644 | 0.795 | 0.615 | 0.646 | 0.676 |
| AUROC | 0.615 | 0.635 | 0.544 | 0.614 | 0.789 | 0.578 | 0.601 | 0.642 |

In a first set of experiments, the loss function $L_1(\theta)$ was used for training the convolutional neural network ("without regularization"). Although an AUROC value of 61.5% is achieved on the test subset of dataset A and also an AUROC value of 63.5% on the separated dataset B, it can be observed that the domains in which the output values of the convolutional neural network lay differ significantly from dataset A to dataset B. In other words, a domain shift is observed.

A bad overall AUROC value of 54.4% is obtained if one mixes the outputs naively together as if it were a complete dataset from only one image acquisition unit, before evaluating the whole set. One potential reason is that the net learns features that are relevant for the task, but it also is sensitive to further properties of the image like the pixel's brightness, or in general the pixel's color distribution. While such image features may not encode meaningful medical information, they can still disturb the outcome of the network, especially if the hazards predicted on the second data set are in a different numerical range as compared with the original training data.

This in particular happens by deviation from the neutral direction $\hat{h}_\theta(x_j) \to \hat{h}_\theta(x_j) + z$, which leads to a redefinition of the baseline hazard function $h_0(t)$ but is not sensed in the loss function used. One may say that the predictions $\hat{h}_\theta(x_i)$ are shifted away from the total diagonal, like schematically shown in Fig. 5.

In these experiments, dataset B had a slightly other color scheme because of the use of another scanner and so the predictions provided by the convolutional neural network only trained on dataset A show a drop in performance.

A first approach to reduce the sensitivity towards different hazards is to re-center the predicted hazards. We thus standardize (we subtract the mean and divide the result by the standard deviation) the predictions of each dataset and merge them afterwards. We display the resulting improvement in the rightest column of each approach in table 2.

To interdict shifting of hazard functions altogether, a L2-regularization-term may be added to the loss function. That is, $L_2(\theta)$ may be used for training the convolutional neural network. This may automatically shift all predictions $\hat{h}_\theta(x_i)$ in the same domain range. Using the loss function $L_2(\theta)$ leads to a higher AUROC value in evaluation on the mixed data set (60.1% instead of 54.4%). By combining the regularization with the aforementioned standardization process, the AUROC value can be improved even more (64.2% instead of 61.4%). Besides, a significantly higher ROC value was achieved on the test data of dataset A throughout this regularization technique.

These experiments prove that it is possible to make survival predictions based on simplified image information using the special loss functions disclosed herein for training a convolutional neural network, and that the domain adaptation techniques succeed in merging the predictions into one range. An AUROC value of up to 79.5% could be achieved.

As apparent from the above, the technique disclosed herein allows extracting information directly from a histological image of a patient using a convolutional neural network. No additional pre-segmentation of the image may be required, which pre-segmentation might be error prone by itself. In this way, labeling of regions of interest by human annotators may also be avoided, which is a time-consuming process and requires highly trained annotators. By normalizing output values of the convolutional neural network for each type of image acquisition unit, accuracy may be improved.

By adding a regularization term into the loss function used to train the convolutional neural network, the outputs may fall into a same range. This may also improve the accuracy of the predictions. Further advantages and modifications to the technique disclosed herein may be apparent to those skilled in the art.

**Claims**

1. A medical image analysis method for obtaining a prognostic score indicative of a risk for a patient, having a melanoma, to experience a predefined event, the method being performed by a processing system (4) and comprising:

    obtaining (202) at least one histological image of a stained tissue sample of a patient, the at least one image depicting at least a part of a primary melanoma tumor comprised in the stained tissue sample of the patient; and analyzing (204) the obtained at least one histological image with a convolutional neural network (16), trained using (a) histological images depicting at least parts of melanoma tumors comprised in stained tissue samples of a plurality of persons and (b) person-specific event information indicative of (i) the person having experienced a predefined event and the time of the predefined event or (ii) the person not having experienced the predefined event and a time of observation of the person, to obtain a prognostic score indicative of a risk for the patient to experience the predefined event, wherein the predefined event comprises at least one of a relapse, a metastasis and death.

2. The method of claim 1, wherein
   the convolutional neural network (16) is trained by minimizing a loss function that is dependent on at least the person-specific event information.

3. The method of claim 2, wherein
   the loss function is based on a survival analysis hazard function.

4. The method of claim 2 or 3, wherein
   the loss function is dependent on a risk set corresponding to a subset of the plurality of persons, wherein each of the persons in the subset has not experienced the predefined event before a given time.

5. The method of claim 4, wherein
   the loss function comprises:

$$log \sum_{j \in R_i} e^{\hat{h}_\theta(x_j)}$$

   wherein log denotes the natural logarithm, $R_i$ denotes the risk set, e denotes Euler's number, $\hat{h}_\theta$ denotes the output of the convolutional neural network and $x_j$ denotes the histological image of one of the persons associated with the index $j$.

6. The method of claim 5, wherein
   the loss function comprises:

$$-\sum_{i \in B} \delta_i \left( \hat{h}_\theta(x_i) - log \sum_{j \in R_i} e^{\hat{h}_\theta(x_j)} \right)$$

   wherein $B$ denotes a mini batch, $\delta_i$ corresponds to a binary value indicating whether a person associated with index $i$ has experienced the predefined event or not, and $x_i$ denotes the histological image of one of the persons associated with the index $i$.

7. The method of claim 6, wherein
   the loss function comprises:

$$-\sum_{i \in B} \delta_i \left( \hbar_\theta(x_i) - log \sum_{j \in R_i} e^{\hbar_\theta(x_j)} \right) + \lambda \left( \sum_{j \in B} \hbar_\theta(x_j) \right)^2$$

wherein $\lambda$ denotes a predefined regularization factor.

8. The method of any one of claims 1 to 7, wherein
the convolutional neural network (16) is trained using a stochastic gradient descent optimization algorithm such as the Adam optimization algorithm.

9. The method of any one of claims 1 to 8, wherein
the convolutional neural network (16) comprises 8 convolutional layers (18, 22, 26, 28, 32, 34, 38, 40), 4 pooling layers (20, 24, 30, 36) and 3 dense layers (42, 44, 46).

10. The method of any one of claims 1 to 9, wherein
one or more of the analyzed at least one histological image and the histological images of the plurality of persons is unsegmented and/or unlabeled.

11. The method of any one of claims 1 to 10, wherein,
an output of the convolutional neural network (16) is used as the prognostic score or, to obtain the prognostic score, an output of the convolutional neural network (16) is normalized based on a predefined correction value associated with a type of an imaging unit used to acquire the at least one histological image.

12. The method of any one of claims 1 to 11, further comprising:
training (306) the convolutional neural network (16) with the histological images of the plurality of persons and the person-specific event information.

13. A method for training a convolutional neural network (16) configured to analyze at least one histological image of a stained tissue sample of a patient, the at least one image depicting at least a part of a primary melanoma tumor comprised in the stained tissue sample of the patient, to obtain a prognostic score indicative of a risk for the patient to experience the predefined event, wherein the predefined event comprises at least one of a relapse, a metastasis and death, the method comprising:

obtaining (302) histological images depicting at least parts of melanoma tumors comprised in stained tissue samples of a plurality of persons;
obtaining (304) person-specific event information indicative of (i) the person having experienced the predefined event and the time of the predefined event or (ii) the person not having experienced the predefined event and a time of observation of the person; and
training (306) the convolutional neural network based on the obtained histological images of the plurality of persons and based on the obtained person-specific event information.

14. A computer program product storing instructions that, when executed by the at least one processor (6), cause the at least one processor (6) to perform the method according to any one of claims 1 to 13.

15. A processing system (4) comprising at least one processor (6) and at least one memory (8), the at least one memory (8) storing instructions that, when executed by the at least one processor (6), cause the at least one processor (6) to perform the method according to any one of claims 1 to 13.

Fig. 1

Obtain at least one histological image of a stained tissue sample of a patient, the at least one image depicting at least a part of a primary melanoma tumor comprised in the stained tissue sample of the patient

202

Analyze the obtained at least one histological image with convolutional neural network to obtain prognostic score

204

Fig. 2

Obtain histological images depicting at least parts of melanoma tumors comprised in stained tissue samples of a plurality of persons — 302

Obtain person-specific event information — 304

Train convolutional neural network based on the obtained histological images and the obtained person-specific event information — 306

Fig. 3

Fig. 4

Fig. 5

Europäisches
Patentamt

European
Patent Office

Office européen
des brevets

## EUROPEAN SEARCH REPORT

Application Number

**EP 23 16 7009**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/381121 A1 (WANG JING [US] ET AL) 3 December 2020 (2020-12-03) * paragraphs [0011], [0043] – [0050], [0058], [0061], [0067], [0069] – [0071], [0075] * ----- | 1-15 | INV. G06F18/2413 G06T7/00 G06V10/44 G06V10/764 G06V20/69 |
| A | WO 2021/053135 A1 (OSLO UNIV [NO]) 25 March 2021 (2021-03-25) * the whole document * ----- | 1-15 | |

TECHNICAL FIELDS SEARCHED (IPC)

G06V
G06F
G06T

The present search report has been drawn up for all claims

| Place of search | Date of completion of the search | Examiner |
|---|---|---|
| The Hague | 22 August 2023 | Mukasa, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 7009

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2023

| Patent document cited in search report | | Publication date | Patent family member(s) | | Publication date |
|---|---|---|---|---|---|
| US 2020381121 | A1 | 03-12-2020 | NONE | | |
| WO 2021053135 | A1 | 25-03-2021 | AU | 2020349037 A1 | 21-04-2022 |
| | | | CA | 3154303 A1 | 25-03-2021 |
| | | | CN | 114667547 A | 24-06-2022 |
| | | | EP | 4032011 A1 | 27-07-2022 |
| | | | IL | 291381 A | 01-05-2022 |
| | | | JP | 2022549629 A | 28-11-2022 |
| | | | WO | 2021053135 A1 | 25-03-2021 |

EPO FORM P0459

For more details about this annex : see Official Journal of the European Patent Office, No. 12/82